(19) Europäisches Patentamt
European Patent Office
Office européen des brevets

(11) **EP 4 661 482 A1**

(12) **EUROPEAN PATENT APPLICATION**
published in accordance with Art. 153(4) EPC

(43) Date of publication:
**10.12.2025 Bulletin 2025/50**

(21) Application number: **24756322.4**

(22) Date of filing: **09.02.2024**

(51) International Patent Classification (IPC):
***H04W 28/02*** (2009.01)

(52) Cooperative Patent Classification (CPC):
**H04W 28/02; H04W 72/566; H04W 74/0833**

(86) International application number:
**PCT/CN2024/077093**

(87) International publication number:
**WO 2024/169950 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310172106**

(71) Applicant: **Huawei Technologies Co., Ltd.
Shenzhen, Guangdong 518129 (CN)**

(72) Inventors:
• **LI, Yunbo
  Shenzhen, Guangdong 518129 (CN)**
• **YU, Jian
  Shenzhen, Guangdong 518129 (CN)**
• **GAN, Ming
  Shenzhen, Guangdong 518129 (CN)**
• **GUO, Yuchen
  Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND COMMUNICATION APPARATUS**

(57)     Embodiments of this application provide a communication method. The method may be applied to a communication system that supports IEEE 802.11 series protocols (such as Wi-Fi 7 and Wi-Fi 8). The method includes: A first station generates a first physical layer protocol data unit PPDU, where the first station includes an access point supporting preemption or a non-access point station supporting preemption, the first PPDU includes any one or more of a first field, a second field, and a third field, the first field indicates whether a preemption operation is allowed to be performed after sending of the first PPDU is completed, the second field indicates a type of a station that is allowed to perform a preemption operation after sending of the first PPDU is completed, and the third field indicates a number of PPDUs that are sent after sending of the first PPDU is completed and on which a preemption operation is allowed to be performed; and the first station sends the first PPDU. The technical solutions of this application may be used to implement transmission of low-latency data.

```
┌─────────────────────────────────────────────┐
│                                             │
│  510: A first station generates a first PPDU │
│                                             │
└─────────────────────────────────────────────┘
                      │
                      │
┌─────────────────────────────────────────────┐
│                                             │
│  520: The first station sends the first PPDU │
│                                             │
└─────────────────────────────────────────────┘
```

FIG. 5

EP 4 661 482 A1

**Description**

This application claims priority to Chinese Patent Application No. 202310172106.9, filed with the China National Intellectual Property Administration on February 17, 2023 and entitled "COMMUNICATION METHOD AND COMMUNICATION APPARATUS", which is incorporated herein by reference in its entirety.

**TECHNICAL FIELD**

This application relates to the communication field, and more specifically, to a communication method and a communication apparatus.

**BACKGROUND**

IEEE 802.11 is one of current mainstream wireless access standards and has been widely used in commercial application in past more than one decade. Low latency is an important research objective of a wireless local area network (wireless local area network, WLAN) standard. In IEEE 802.11be, restricted target wake time (restricted target wake time, R-TWT) is introduced to improve support for a low-latency service. In the R-TWT, a service period (service period) is obtained through allocation in advance based on a periodic service, and a high access priority is given to the low-latency service in the service period. Although the R-TWT can improve the support for the low-latency service, a next-generation WLAN standard, that is, ultra high reliability (ultra high reliability, UHR), may impose a higher requirement on the low latency, for example, an ultra-low latency less than several milliseconds.

For example, in some actual application scenarios such as augmented reality (augmented reality, AR), virtual reality (virtual reality, VR), industrial internet of things (internet of things, IoT), and telemedicine, such an ultra-low latency requirement exists, but the current WLAN standard cannot meet the requirement currently. Therefore, a new low-latency mechanism is urgently needed to be introduced to resolve the contradiction.

**SUMMARY**

Embodiments of this application provide a communication method and a communication apparatus, to implement transmission of low-latency data without changing or slightly changing a physical layer (physical layer, PHY) frame structure, thereby facilitating chip implementation.

According to a first aspect, a communication method is provided. The method includes: A first station generates a first physical layer protocol data unit (PHY protocol data unit, PPDU), where the first station includes an access point supporting preemption or a non-access point station supporting preemption, for example, the first station may be the access point supporting preemption or the non-access point station supporting preemption, the first PPDU includes any one or more of a first field, a second field, and a third field, the first field indicates whether a preemption operation is allowed to be performed after sending of the first PPDU is completed, the second field indicates a type of a station that is allowed to perform a preemption operation after sending of the first PPDU is completed, and the third field indicates a number of PPDUs that are sent after sending of the first PPDU is completed and on which a preemption operation is allowed to be performed; and the first station sends the first PPDU.

In the technical solutions provided in this application, the first field, the second field, and the third field can indicate whether preemption is allowed, the type of the station that is allowed to perform the preemption operation, and the number of PPDUs on which the preemption operation is allowed to be performed, to implement transmission of low-latency data without changing or slightly changing a physical layer frame structure, thereby facilitating chip implementation.

It should be understood that, preemption means that transmission of a low-latency service is preferentially performed, and transmission of a non-low-latency service is resumed after transmission of the low-latency service is completed. The first station may be the access point (access point, AP) supporting preemption or the non-access point station (none access point station, non-AP STA) supporting preemption.

It should be understood that specific names of the first field, the second field, and the third field are not limited in this application. In a possible implementation scenario, the first field may be represented by "Preemption Allowed", the second field may be represented by "Preemption Initiator", and the third field may be represented by "Preemption PPDU Number".

For example, if a value of the first field is set to 1, it indicates that the preemption operation is allowed to be performed after sending of the first PPDU is completed. If the value of the first field is set to 0, it indicates that the preemption operation is not allowed to be performed after sending of the first PPDU is completed; and vice versa.

In a possible implementation, the first field may also be null, that is, the first PPDU does not include the first field, to indicate that the preemption operation is not allowed to be performed after sending of the first PPDU is completed.

The second field indicates the type of the station that is allowed to perform the preemption operation after sending of the first PPDU is completed. For example, the type of the station may include all or a part of the following types: 1. Only a receiving station is allowed to perform a preemption operation. 2. Only an associated station is allowed to perform a preemption operation. 3. Only a non-associated station is allowed to perform a preemption operation. 4. An associated station and a non-associated station are allowed to perform a preemption operation.

The third field indicates the number of PPDUs that are sent after sending of the first PPDU is completed and on which the preemption operation is allowed to be performed. For example, when the third field is one bit, a value 0 may indicate that only a single preemption PPDU is allowed to be sent, and a value 1 may indicate that a plurality of preemption PPDUs are allowed to be sent. When the third field is a plurality of bits, it may indicate an upper limit of a number of preemption PPDUs that are allowed to be sent.

With reference to the first aspect, in some implementations of the first aspect, the first field, the second field, or the third field is carried in a physical layer signal SIG field in the first PPDU or a field in a medium access control layer (medium access control, MAC) frame header carried in the first PPDU.

For example, the PPDU includes three parts: a physical layer frame header, Data (Data), and physical layer extension (PHY extension, PE). The physical layer frame header includes a physical layer SIG field. The Data includes a medium access control protocol data unit (MAC protocol data unit, MPDU) or an aggregated medium access control protocol data unit (aggregated MAC protocol data unit, A-MPDU), where the A-MPDU includes a plurality of MPDUs. The MPDU includes three parts: a MAC frame header, a frame body (frame body), and a frame detection sequence (frame check sequence, FCS).

For example, the physical layer SIG field in the first PPDU may be a UHR SIG field or a U SIG field. Any one or more of the first field, the second field, and the third field may be carried in any field in the MAC frame header carried in the first PPDU, for example, may be carried in an aggregation control (A-Control) field.

It should be understood that the first field, the second field, and the third field may be carried in a same field, or may be carried in different fields. For example, the first PPDU includes a first field, a second field, and a third field. All the first field, the second field, and the third field may be carried in a physical layer SIG field in the first PPDU, or all the first field, the second field, and the third field may be carried in a field in a MAC frame header carried in the first PPDU, or the first field may be carried in a physical layer SIG field in the first PPDU and the second field and the third field are carried in a field in a MAC frame header carried in the first PPDU. In another example, the first PPDU includes a first field and a second field. The first field may be carried in a physical layer SIG field in the first PPDU, and the second field may be carried in a field in a MAC frame header carried in the first PPDU, or both the first field and the second field may be carried in a physical layer SIG field in the first PPDU, or both the first field and the second field may be carried in a field in a MAC frame header carried in the first PPDU. In another example, the first PPDU includes a first field. The first field may be carried in a physical layer SIG field in the first PPDU or a field in a MAC frame header carried in the first PPDU.

In the technical solutions provided in this application, the first field, the second field, or the third field may be carried in a same field or different fields, so that selectivity and flexibility of the solution can be improved while transmission of low-latency data is implemented.

With reference to the first aspect, in some implementations of the first aspect, the method further includes: The first station sends a first window, where the first window indicates a longest time for which a station preparing to perform a preemption operation needs to wait, and the first window is an integer greater than or equal to 0.

In the technical solutions provided in this application, if a plurality of stations are allowed to initiate preemption, a collision may occur. In embodiments of this application, a backoff (backoff) mechanism is introduced after a preemption allowed PPDU is sent, to resolve the collision problem between the plurality of stations that initiate preemption.

It should be understood that, in embodiments of this application, a station that sends the preemption allowed PPDU is usually a transmission opportunity holder (TXOP holder), but is also applicable to a scenario in which another station transfers or specifies a channel use right to the station that sends the preemption allowed PPDU. For example, an AP first becomes a transmission opportunity holder through contention, and the AP transfers a channel use right to the first station through triggered TXOP sharing (triggered TXOP sharing), also referred to as an MU-RTS TXS mechanism or a reverse direction grant (reverse direction grant, RDG) mechanism. In this case, the first station may also send the preemption allowed PPDU. For ease of description, in embodiments of this application, the first station is used as the transmission opportunity holder for description.

For example, the first window is a value sent by the first station, and indicates the longest time for which the station preparing to perform the preemption operation needs to wait. For example, the value of the first window is N, where N may be an independent parameter, and a specific value may be specified in a standard or determined by the transmission opportunity holder.

In the technical solutions provided in this application, a case in which the collision may occur when the plurality of stations simultaneously initiate the preemption operations is considered, and the value of the first window is set, so that the station that initiates preemption has a higher contention priority, thereby avoiding the collision.

With reference to the first aspect, in some implementations of the first aspect, before the first station sends the first window, the method further includes: The first station determines a first backoff counter value based on a second window, where the second window is an integer greater than 0, and the first backoff counter value is an integer greater than 0 and less than or equal to the second window; and the first station determines the first window based on the first backoff counter value.

It should be understood that the second window is a window of the first station. In the method provided in this application, the first backoff counter value of the first station may be randomly determined based on the second window. For example, if the second window is 15, a positive integer may be randomly determined from (0, 15] as the first backoff counter value. For example, an obtained first backoff counter value is 7. Optionally, an integer may also be randomly determined from [0, 15] as the first backoff counter value. If an obtained integer is 0, re-determining is performed until an obtained first backoff counter value is greater than 0. It should be understood that (a, b] represents a range greater than a and less than or equal to b, and [a, b] represents a range greater than or equal to a and less than or equal to b.

It should be understood that the first window is a preemption window sent by the first station to another station supporting preemption, and the value of the first window may be determined based on the first backoff counter value. A value of the first backoff counter is denoted as M. For example, the first window may be determined according to the following formula:

$$N=M+(AIFS\_TXOPHolder-xIFS)/aSlotTime-1$$

When AIFS_TXOPHolder=xIFS, the formula can be simplified as follows:

$$N=M-1.$$

xIFS is a preset time space, AIFS_TXOPHolder is an AIFS used by the transmission opportunity holder in channel access, aSlotTime represents a slot, M represents the first backoff counter value, and N represents the first window.

After determining the value N of the first window, the first station indicates the value to another station that may initiate preemption. The station that initiates preemption needs to perform backoff after a channel is idle for xIFS after a start moment at which preemption is allowed, where a value of the backoff counter is an integer randomly selected from [0, N], and may send the preemption PPDU after backoff ends.

It should be understood that, because the value of the first window is N, all stations preparing to initiate preemption initiate low-latency service data within a time of $xIFS+N\times aSlotTime$. Because a value of $xIFS+N\times aSlotTime$ is definitely less than a value of $xIFS+(N+1)\times aSlotTime$, in this manner, the transmission opportunity holder can make the station that initiates preemption have a higher contention priority.

In the technical solutions provided in this application, a case in which the collision may occur when the plurality of stations simultaneously initiate the preemption operations is considered, and the value of the first window is set, so that the station that initiates preemption has a higher contention priority, thereby avoiding the collision.

With reference to the first aspect, in some implementations of the first aspect, the first window is carried in the physical layer signal SIG field in the first PPDU or the field in the MAC frame header carried in the first PPDU.

With reference to the first aspect, in some implementations of the first aspect, when the first field indicates that the preemption operation is allowed to be performed after sending of the first PPDU is completed, the method further includes: The first station sends a second PPDU after a short interframe space SIFS after sending of the first PPDU ends, where the second PPDU includes low-latency service data.

It should be understood that the first PPDU is the preemption allowed PPDU. The SIFS is less than the preset time space xIFS.

For example, the low-latency service data is generally service data that has a very high requirement on a transmission latency and that needs to use a preemption mechanism to meet the latency requirement of the low-latency service data. For example, the latency requirement is at a millisecond level. That is, a latency requirement of the second PPDU may be less than a preset threshold.

If cache data of the first station includes a second PPDU carrying the low-latency service data in a process of sending the first PPDU, the first station is allowed to send the second PPDU carrying the low-latency service data after an SIFS time after sending of the first PPDU ends. Because the station that initiates preemption needs to wait at least time of xIFS after the first PPDU is sent, and the xIFS is greater than the SIFS, no station that initiates preemption sends a preemption PPDU after the SIFS ends and before the xIFS ends, and no collision occurs.

In the technical solutions provided in this application, a case in which the collision may occur when the plurality of stations simultaneously initiate the preemption operations is considered, and the transmission opportunity holder is set to send the low-latency data after the SIFS after sending of the first PPDU ends, so that the transmission opportunity holder has a higher contention priority, thereby avoiding the collision.

With reference to the first aspect, in some implementations of the first aspect, the method further includes: The first station receives a third PPDU, where the third PPDU is a PPDU that is sent by a second station and on which a preemption operation is performed, the second station is a station that performs the preemption operation, the third PPDU includes a fourth field, and the fourth field indicates end information of the preemption operation performed by the second station.

In some possible application scenarios, the first station may not be able to accurately learn of a time at which transmission of the preemption PPDU ends. In embodiments of this application, indication information indicating that the preemption operation ends may be set in the preemption PPDU, and the indication information is the fourth field in the third PPDU. Optionally, the fourth field may be represented by using one or more bits. For example, one bit may be used to indicate whether the preemption PPDU is a last preemption PPDU, or one or more bits may be used to indicate a number of to-be-transmitted preemption PPDUs.

In the technical solutions provided in this application, the fourth field is set for the preemption PPDU sent by the station that initiates the preemption operation, to obtain an end time of the preemption operation, so that a recovery speed of transmission of a non-low-latency service can be ensured while transmission of the low-latency data is implemented.

With reference to the first aspect, in some implementations of the first aspect, the fourth field is carried in any one of the following: a physical layer frame header of the third PPDU, a more data field in a MAC frame header carried in the third PPDU, an aggregation control A-Control field in the MAC frame header carried in the third PPDU, or a reserved field in the MAC frame header carried in the third PPDU.

In some possible implementations, the fourth field may be carried in the physical layer frame header, for example, UHR SIG or U SIG. For example, a value 0 may indicate that there is a subsequent preemption PPDU, and a value 1 may indicate that this is the last preemption PPDU. Alternatively, a value 1 may indicate that there is a subsequent preemption PPDU, and a value 0 may indicate that this is the last preemption PPDU.

In some possible implementations, the fourth field may further reuse the more data (More Data) field in the MAC frame header carried in the third PPDU. For example, a value 1 may indicate that there is a subsequent preemption PPDU, and a value 0 may indicate that this is the last preemption PPDU. Alternatively, a value 0 may indicate that there is a subsequent preemption PPDU, and a value 1 may indicate that this is the last preemption PPDU.

In some possible implementations, the fourth field may be further carried in the A-Control field or the reserved field in the MAC frame header carried in the third PPDU. For example, a value 0 may indicate that there is a subsequent preemption PPDU, and a value 1 may indicate that this is the last preemption PPDU. Alternatively, a value 1 may indicate that there is a subsequent preemption PPDU, and a value 0 may indicate that this is the last preemption PPDU.

It should be understood that specific names of locations carried in the first field to the fourth field are not limited in this application. The foregoing descriptions are merely examples, and should not be construed as a limitation on this application.

With reference to the first aspect, in some implementations of the first aspect, the first station is the access point supporting preemption, and the method further includes: The first station generates first information, where the first information indicates maximum duration in which a first type station is allowed to continuously use a channel after the first type station obtains the channel through contention, and the first type station includes a station supporting preemption; and the first station sends the first information.

It should be understood that the first information may be a transmission opportunity (transmission opportunity, TXOP) limit in a management frame sent by the first station. For example, the management frame may be a beacon (beacon) frame or an associated response frame. The first type station includes the second station, and the second station is a station supporting preemption. The first information may indicate the maximum duration in which the second station is allowed to continuously use the channel after the second station obtains the channel through contention.

In embodiments of this application, a large transmission opportunity limit value may be set for the station supporting preemption, that is, the first information is set to be greater than a preset threshold, so that the station supporting preemption can continuously use the channel for a long time after performing one successful channel contention, thereby improving system efficiency.

With reference to the first aspect, in some implementations of the first aspect, the method further includes: The first station generates second information, where the second information indicates a maximum time length for sending a PPDU by the first type station; and the first station sends the second information.

For example, the second information may be a preemption limit (Preemption Limit) field. For example, the duration indicated by the second information may be less than the duration indicated by the first information. The second information may indicate a maximum time length for sending the PPDU by the second station, so that duration for sending the PPDU by the station supporting preemption is less than the second information, to avoid the non-low-latency service to occupy a long channel use time.

In some possible implementations, the preemption limit (Preemption Limit) field may be carried in an enhanced distributed channel access (enhanced distributed channel access, EDCA) contention parameter sent by the AP to the second station.

It should be understood that, for information exchange performed when there is a response frame, a preemption limit needs to include a total time limit for the information exchange. For example, for interaction of data/block acknowledgment (data/BA), a sum of a PPDU carrying data, a PPDU carrying BA, and a short interframe space (short interframe space, SIFS) between the two cannot exceed the preemption limit.

With reference to the first aspect, in some implementations of the first aspect, the method further includes: The first station generates third information, where the third information indicates maximum duration in which a second type station is allowed to continuously use a channel after the second type station obtains the channel through contention, and the second type station includes a station not supporting preemption; and the first station sends the third information.

It should be understood that the third information may be a transmission opportunity limit in a management frame sent by the first station. For example, the management frame may be a beacon frame or an associated response frame.

In embodiments of this application, a small transmission opportunity limit value may be set for the station not supporting preemption, that is, the third information is set to be less than a preset threshold, to control a maximum value of continuous duration in which the station not supporting preemption uses the channel once, so as to provide more channel access opportunities for the station supporting preemption.

It should be understood that in the method provided in this application, in a typical setting manner, the first information should be greater than or equal to the second information, and the first information should be greater than or equal to the third information. For example, the first information is 5 ms (ms), the second information is 1 ms, and the third information is 1 ms. Alternatively, the first information is 6 ms, the second information is 2 ms, and the third information is 1 ms. It should be understood that the foregoing values are merely examples, and a value of the first information, a value of the second information, or a value of the third information is not specifically limited in this application, provided that the first information is greater than or equal to the second information and the first information is greater than or equal to the third information. However, it should also be understood that this is not limited to the typical setting manner.

According to a second aspect, a communication method is provided. The method includes: A second station receives a first window from a first station, where the first station includes an access point supporting preemption or a non-access point station supporting preemption, the second station includes a station preparing to perform a preemption operation, the first window indicates a longest time for which the second station needs to wait to perform a preemption operation, and the first window is an integer greater than or equal to 0; and the second station determines, based on the first window, a waiting time to perform the preemption operation.

It should be understood that the first window is a preemption window sent by the first station to the second station. The second station may randomly determine a backoff counter value of the second station based on the first window, that is, determine the waiting time for the second station to perform the preemption operation.

In the technical solutions provided in this application, a case in which a collision may occur when a plurality of stations simultaneously initiate preemption operations is considered, and a value of the first window is set, so that a station that initiates preemption has a higher contention priority, thereby avoiding a collision between the first station and the second station.

With reference to the second aspect, in some implementations of the second aspect, the first window is carried in a physical layer signal SIG field in a first PPDU or a field in a MAC frame header carried in the first PPDU, and the first PPDU is a PPDU sent by the first station.

With reference to the second aspect, in some implementations of the second aspect, that the second station determines, based on the first window, the waiting time to perform the preemption operation includes: The second station determines a second backoff counter value based on the first window, where the second backoff counter value is an integer greater than or equal to 0 and less than or equal to the first window; and the second station performs the preemption operation when the second backoff counter value decreases to 0.

For example, N may be used to represent the first window, and the second station may randomly determine the backoff counter value of the second station based on the first window. For example, if N is 7, the second station may randomly determine an integer from [0, 7] as the second backoff counter value. For example, if an obtained second backoff counter value is 3, the second station needs to wait for three slots of idle channels before performing the preemption operation. It should be understood that, if the second backoff counter value is 0, the second station directly performs the preemption operation without waiting.

In the technical solutions provided in this application, a case in which the collision may occur when the plurality of stations simultaneously initiate the preemption operations is considered, and the value of the first window is set, so that the station that initiates preemption has a higher contention priority, thereby avoiding the collision between the first station and the second station.

In an independent solution, or with reference to the second aspect, in some implementations of the second aspect, the method further includes: The second station sends a third PPDU, where the third PPDU is a PPDU that is sent by the second station and on which a preemption operation is performed, the third PPDU includes a fourth field, and the fourth field indicates end information of the preemption operation performed by the second station.

In some possible application scenarios, a transmission opportunity holder may not be able to accurately learn of a time at which transmission of a preemption PPDU ends. In embodiments of this application, indication information indicating that the preemption operation ends may be set in the preemption PPDU, and the indication information is the fourth field in the third PPDU. Optionally, the fourth field may be represented by using one or more bits. For example, one bit may be used to indicate whether the preemption PPDU is a last preemption PPDU, or more bits may be used to indicate a number of to-be-transmitted preemption PPDUs.

In the technical solutions provided in this application, the fourth field is set for the preemption PPDU sent by the station that initiates the preemption operation, to obtain an end time of the preemption operation, so that a recovery speed of transmission of a non-low-latency service can be ensured while transmission of the low-latency data is implemented.

With reference to the second aspect, in some implementations of the second aspect, the fourth field is carried in any one of the following: a physical layer frame header of the third PPDU, a more data field in a MAC frame header carried in the third PPDU, an aggregation control A-Control field in the MAC frame header carried in the third PPDU, or a reserved field in the MAC frame header carried in the third PPDU.

In some possible implementations, the fourth field may be carried in the physical layer frame header, for example, UHR SIG or U SIG. For example, a value 0 may indicate that there is a subsequent preemption PPDU, and a value 1 may indicate that this is the last preemption PPDU. Alternatively, a value 1 may indicate that there is a subsequent preemption PPDU, and a value 0 may indicate that this is the last preemption PPDU.

In some possible implementations, the fourth field may further reuse the more data (More Data) field in the MAC frame header carried in the third PPDU. For example, a value 1 may indicate that there is a subsequent preemption PPDU, and a value 0 may indicate that this is the last preemption PPDU. Alternatively, a value 0 may indicate that there is a subsequent preemption PPDU, and a value 1 may indicate that this is the last preemption PPDU.

In some possible implementations, the fourth field may be further carried in the A-Control field or the reserved field in the MAC frame header carried in the third PPDU. For example, a value 0 may indicate that there is a subsequent preemption PPDU, and a value 1 may indicate that this is the last preemption PPDU. Alternatively, a value 1 may indicate that there is a subsequent preemption PPDU, and a value 0 may indicate that this is the last preemption PPDU.

In an independent solution, or with reference to the second aspect, in some implementations of the second aspect, the first station is the access point supporting preemption, and the method further includes: The second station receives first information from the first station, where the first information indicates maximum duration in which the second station is allowed to continuously use a channel after the second station obtains the channel through contention.

It should be understood that the first information may be a TXOP limit in a management frame sent by the first station. The first information may indicate the maximum duration in which the second station is allowed to continuously use the channel after the second station obtains the channel through contention.

In embodiments of this application, a large transmission opportunity limit value may be set for the station supporting preemption, that is, the first information is set to be greater than a preset threshold, so that the station supporting preemption can continuously use the channel for a long time after performing one successful channel contention, thereby improving system efficiency.

In an independent solution, or with reference to the second aspect, in some implementations of the second aspect, the method further includes: The second station receives second information from the first station, where the second information indicates a maximum time length for sending the PPDU by the second station.

For example, the second information may be a preemption limit (Preemption Limit) field. The second information may indicate a maximum time length for sending the PPDU by the second station, so that duration for sending the PPDU by the station supporting preemption is less than the second information, to avoid the non-low-latency service to occupy a long channel use time.

It should be understood that, for information exchange performed when there is a response frame, a preemption limit needs to include a total time limit for the information exchange. For example, for interaction of data/block acknowledgment (data/BA), a sum of a PPDU carrying data, a PPDU carrying BA, and a short interframe space SIFS between the two cannot exceed the preemption limit.

For example, the second information is less than the first information. For example, the first information is 4 ms (ms), and the second information is 1 ms. Alternatively, the first information is 5 ms, and the second information is 2 ms. It should be understood that the foregoing values are merely examples. A value of the first information, a value of the second information, or a value of the third information is not specifically limited in this application. In typical setting, it is generally required that the second information is less than the first information.

According to a third aspect, a communication apparatus is provided, including modules or units configured to perform the method in any one of the first aspect or the possible implementations of the first aspect.

According to a fourth aspect, a communication apparatus is provided, including a processor. The processor is coupled to a memory, to execute instructions in the memory, to implement the method in any one of the first aspect or the possible implementations of the first aspect. Optionally, the communication apparatus further includes the memory. Optionally, the communication apparatus further includes a communication interface. The processor is coupled to the communication interface, and controls the communication interface to implement communication with another network element.

In an implementation, the communication apparatus is an access point. When the communication apparatus is the access point, the communication interface may be a transceiver or an input/output interface.

In another implementation, the communication apparatus is a chip configured in the access point. When the communication apparatus is the chip configured in the access point, the communication interface may be an input/output interface.

In an implementation, the communication apparatus is a station. When the communication apparatus is the station, the communication interface may be a transceiver or an input/output interface.

In another implementation, the communication apparatus is a chip configured in the station. When the communication apparatus is the chip configured in the station, the communication interface may be an input/output interface.

Optionally, the transceiver may be a transceiver circuit. Optionally, the input/output interface may be an input/output circuit.

According to a fifth aspect, a communication apparatus is provided, including modules or units configured to perform the method in any one of the second aspect or the possible implementations of the second aspect.

According to a sixth aspect, a communication apparatus is provided, including a processor. The processor is coupled to a memory, to execute instructions in the memory, to implement the method in any one of the second aspect or the possible implementations of the second aspect. Optionally, the communication apparatus further includes the memory. Optionally, the communication apparatus further includes a communication interface. The processor is coupled to the communication interface, and controls the communication interface to implement communication with another network element.

In an implementation, the communication apparatus is an access point. When the communication apparatus is the access point, the communication interface may be a transceiver or an input/output interface.

In another implementation, the communication apparatus is a chip configured in the access point. When the communication apparatus is the chip configured in the access point, the communication interface may be an input/output interface.

In an implementation, the communication apparatus is a station. When the communication apparatus is the station, the communication interface may be a transceiver or an input/output interface.

In another implementation, the communication apparatus is a chip configured in the station. When the communication apparatus is the chip configured in the station, the communication interface may be an input/output interface.

Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to: receive a signal by using the input circuit, and send a signal by using the output circuit, so that the processor performs the method in any one of the first aspect and the second aspect and the possible implementations of the first aspect and the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to: read instructions stored in the memory, receive a signal by using a receiver, and transmit a signal by using a transmitter, to perform the method in any one of the first aspect and the second aspect and the possible implementations of the first aspect and the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus in the eighth aspect may be a chip. The processor may be implemented by using hardware or software. When the processor is implemented by using hardware, the processor may be a logic circuit, an integrated circuit, or the like. When the processor is implemented by using software, the processor may be a general purpose processor, and may be implemented by reading software code stored in the memory. The memory may be integrated into the processor, or may be located outside the processor and exist independently.

According to a ninth aspect, a computer program product is provided. The computer program product includes a computer program (which may also be referred to as code or instructions). When the computer program is run, a computer is enabled to perform the method in any one of the first aspect and the second aspect and the possible implementations of each of the first aspect and the second aspect.

According to a tenth aspect, a computer-readable medium is provided. The computer-readable medium stores a computer program (which may also be referred to as code or instructions). When the computer program is run on a computer, the computer is enabled to perform the method in any one of the first aspect and the second aspect and the possible implementations of the first aspect and the second aspect.

According to an eleventh aspect, a communication system is provided. The communication system includes the foregoing first station and/or second station. The first station is configured to perform the method in any one of the first aspect or the possible implementations of the first aspect, and the second station is configured to perform the method in any one of the second aspect or the possible implementations of the second aspect.

## BRIEF DESCRIPTION OF DRAWINGS

FIG. 1 is a diagram of a basic architecture of IEEE802.11 according to this application;
FIG. 2 is a diagram of a communication apparatus according to an embodiment of this application;
FIG. 3 is a diagram of a structure of an EDCA parameter set element according to an embodiment of this application;
FIG. 4 is a diagram of a structure of a preemption EDCA parameter set element according to an embodiment of this application;
FIG. 5 is an example flowchart of generating and sending, by a first station, a preemption allowed PPDU according to an embodiment of this application;
FIG. 6 is a diagram of a field that indicates a preemption operation and that is in a preemption allowed PPDU according to an embodiment of this application;
FIG. 7 is a diagram of sending a low-latency service by a station that initiates preemption according to an embodiment of this application;
FIG. 8 is a diagram of sending a low-latency service by a transmission opportunity holder according to an embodiment of this application;
FIG. 9 is a diagram of arrival of a low-latency service of a transmission opportunity holder according to an embodiment of this application;
FIG. 10 is a diagram of no arrival of a low-latency service of a transmission opportunity holder according to an embodiment of this application;
FIG. 11 is a block diagram of a communication apparatus according to an embodiment of this application; and
FIG. 12 is a block diagram of a communication device according to an embodiment of this application.

## DESCRIPTION OF EMBODIMENTS

The following describes technical solutions of embodiments in this application with reference to accompanying drawings. Clearly, the described embodiments are some but not all of embodiments of this application. All other embodiments obtained by a person of ordinary skill in the art based on embodiments of this application without creative efforts shall fall within the protection scope of this application.

In embodiments of this application, the term like "example" or "for example" is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

It should be noted that the "field" in this application may be a part of information in general, and the "field" may also be referred to as a "field", a "field", or the like. In addition, a name of the field in this application is merely an example, and may also be another name in specific implementation. This is not specifically limited in this application.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

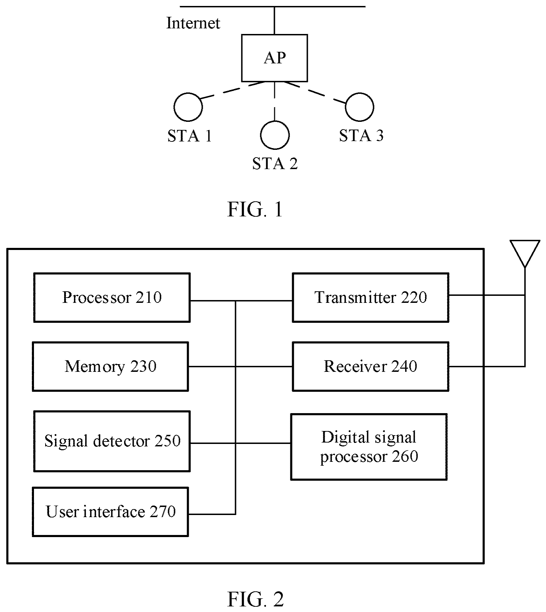

IEEE 802.11 is one of current mainstream wireless access standards and has been widely used in commercial application in past more than one decade. FIG. 1 is a diagram of a basic architecture of IEEE 802.11 according to this application. An access point (access point, AP) accesses the internet in a wired or wireless manner, and the AP is associated with a plurality of stations (stations, STAs), for example, a STA 1 to a STA 3 shown in the figure. Uplink and downlink wireless communication is performed between the AP and the associated STAs by using the IEEE 802.11 protocol.

Low latency is an important research objective of a wireless local area network (wireless local area network, WLAN) standard. In IEEE 802.11be, restricted target wake time (restricted target wake time, R-TWT) is introduced to improve support for a low-latency service. In the R-TWT, a service period (service period) is obtained through allocation in advance based on a periodic service, and a high access priority is given to the low-latency service in the service period. Although the R-TWT can improve the support for the low-latency service, a next-generation WLAN standard, that is, ultra high reliability (ultra high reliability, UHR), may impose a higher requirement on the low latency, for example, an ultra-low latency less than several milliseconds. In some actual application scenarios such as augmented reality (augmented reality, AR) reality (virtual reality, VR), industrial internet of things (internet of things, IoT), and telemedicine, such an ultra-low latency requirement exists, but the current WLAN standard cannot meet the requirement currently. Therefore, a new low-latency mechanism is urgently needed to be introduced to resolve the contradiction.

Preemption (preemption) is a potential technology for the ultra-low latency. A principle of preemption is to interrupt transmission of a non-low-latency service that is currently being transmitted, and preferentially transmit a low-latency service. After transmission of the low-latency service is completed, transmission of the non-low-latency service is resumed. It should be understood that the low-latency service and the non-low-latency service are relative. The non-low-latency service may also have a latency requirement, but a latency required by the non-low-latency service is longer than that required by the low-latency service. In a conventional technology, in a process of transmitting a non-low-latency service long packet, if a cache data packet newly arrived at a sending station side includes a low-latency service data packet, the sending station interrupts transmission of the non-low-latency service long packet and transmits the low-latency service data packet. After transmission of the low-latency service data packet is completed, transmission of a remaining non-low-latency service long packet that is not completely transmitted continues. This method greatly changes a physical layer and significantly increases complexity of chip implementation. Because packet assembly of a physical layer protocol data unit (PHY protocol data unit, PPDU) is usually implemented by using hardware, a new hardware implementation needs to be added for processing of interrupting a long PPDU, and a processing latency requirement is very high.

In the communication method provided in this application, the sending station divides a to-be-sent non-low-latency data packet into a plurality of short PPDUs, and then sends the plurality of short PPDUs one by one. If a cache data packet newly arrived at a sending station side or another station in a process of transmitting a short PPDU includes a low-latency service data packet, after completing transmission of the PPDU, the sending station preferentially transmits the low-latency data packet, and resumes transmission of another to-be-transmitted non-low-latency data packet after transmission of the low-latency data packet is completed. According to the method provided in this application, the physical layer can be not changed or can be slightly changed, thereby facilitating chip implementation.

For ease of understanding of the technical solutions of this application, the following briefly describes related concepts or related technologies in this application.

1. Enhanced distributed channel access (enhanced distributed channel access, EDCA) is a channel competition mechanism defined by Wi-Fi multimedia (Wi-Fi multimedia, WMM). This helps a high-priority packet be preferentially transmitted and occupy more bandwidth.

2. Access category (access category, AC): WMM defines four access categories, and correspondingly, the four access categories have their respective priority queues. These queues are classified into AC-VO (voice queue), AC-VI (video queue), AC-BE (best effort queue), and AC-BK (background queue) in descending order of priorities. A packet in a queue with a higher priority has a stronger capability of channel preemption.

3. Short interframe space (short interframe space, SIFS): The SIFS is a time space required, by a wireless device, between receiving a receive frame and sending a response frame. In an IEEE 802.11 network, the SIFS is an interframe space that is maintained before and after transmission of an acknowledgment frame and a clear to send frame. Duration of the SIFS is usually 16 microseconds (μs).

The technical solutions provided in embodiments of this application may be applicable to a wireless local area network (wireless local area network, WLAN) and a next-generation WLAN standard UHR scenario. For example, the technical solutions may be applicable to an IEEE 802.11 system series standard, including but not limited to an 802.11a/b/g standard, an 802.11n standard, an 802.11ac standard, an 802.11ax standard, or a next-generation standard of the 802.11ax standard, for example, an 802.11be standard, Wi-Fi 7, or extremely high throughput (extremely high throughput, EHT), and for another example, a next-generation standard of 802.11be, Wi-Fi 8, or later next-generation standard. Currently, a standard used by the WLAN is IEEE802.11 series.

The WLAN may include a plurality of basic service sets (basic service sets, BSSs), a network node in the BSS is a station (station, STA), and the STA includes an access point (access point, AP) station AP and a non-access point station (none access point station, non-AP STA). Each BSS may include one AP and a plurality of non-AP STAs associated with the AP. The AP in embodiments of this application supports a preemption mechanism.

Although embodiments of this application are mainly described by using an example in which a WLAN network, especially a network to which an IEEE 802.11 system standard is applied, is deployed, a person skilled in the art easily understands that various aspects in embodiments of this application may be extended to other networks that use various standards or protocols, for example, Bluetooth (Bluetooth), ZigBee (ZigBee), random phase multiple access (random phase multiple access, RPMA), a high performance radio local area network (high performance radio local area network, HIPERLAN), a wide area network (wide area network, WAN), and a personal area network (personal area network, PAN), and other networks that are known or developed in the future. Therefore, regardless of a used coverage area and a used wireless access protocol, the various aspects provided in embodiments of this application are applicable to any suitable wireless network.

Embodiments of this application are further applicable to a wireless local area network system, like an internet of things (internet of things, IoT) network or a vehicle-to-everything (vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication system applicable to this application is only an example for description, and the communication system applicable to this application is not limited thereto. This is uniformly described herein, and details are not described below again.

In embodiments of this application, an AP or a non-AP STA obtains a transmission opportunity (transmission opportunity, TXOP) through channel contention, and then transmits low-latency service data in the TXOP by using a preemption mechanism.

The AP is also referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device having a wireless fidelity (wireless fidelity, Wi-Fi) chip. The AP may be a device that supports any one of the foregoing WLAN or IEEE 802.11 system series standards. For example, the AP may be an AP device, for example, a communication server, a router, a switch, or a bridge.

The non-AP STA may be a wireless communications chip, a wireless sensor, or a wireless communications terminal, for example a mobile phone, a tablet computer, a laptop, a set-top box, a smart television, a smart wearable device, a vehicle-mounted communication device, or a computer that supports a Wi-Fi communication function. For example, the station may support any one of the foregoing WLAN or IEEE 802.11 system series standards.

FIG. 2 is a diagram of a communication apparatus according to an embodiment of this application. The communication apparatus may include one or more of the following components: a processor 210, a transmitter 220, a memory 230, a receiver 240, a signal detector 250, a digital signal processor 260, and a user interface 270. It should be understood that the communication apparatus may include only some modules in the figure. For example, the communication apparatus includes a processor 210 and a memory 230. In some possible implementations, the communication apparatus may be an AP or a non-AP STA.

In this embodiment of this application, a low-latency service is a service whose latency requirement needs to be met by using a preemption mechanism. Generally, a latency requirement of the service is extremely high, and is at a millisecond level. The non-low-latency service may also have a latency requirement, but a latency required by the non-low-latency service is lower than that required by the low-latency service. The non-low-latency service may also have ultra-long latency tolerance, that is, has no latency requirement, for example, file copying. It should be understood that the low-latency service may be a service whose latency requirement is less than a preset time threshold, and the non-low-latency service may be a service whose latency requirement is greater than the preset time threshold or a service having no latency requirement.

It should be understood that the two types of services in embodiments of this application may also be referred to as a low-latency service and a high-latency service, a low-latency service and a lower-latency service, and the like. The specific name should not be understood as a limitation on this application. For ease of description, the low-latency service and the non-low-latency service are uniformly used in this application.

A service latency of using the preemption mechanism may be only several milliseconds. However, in a current WLAN system, a maximum time (TXOP limit) in which a station can continuously use a channel after obtaining the channel through contention may be as long as 5 milliseconds or longer, and a specific time varies according to local laws and regulations. Once a station not supporting a preemption service obtains the channel through contention, a station that needs to use the preemption service cannot obtain a preemption opportunity in a timely manner.

This embodiment of this application provides a group of EDCA contention parameters, and the group of EDCA contention parameters may be carried in a management frame broadcast by the AP. Specifically, the AP broadcasts a preemption EDCA parameter set element (Preemption EDCA Parameter Set element) and an EDCA parameter set element (EDCA Parameter Set element), and a station supporting the preemption mechanism uses a parameter in the preemption EDCA parameter set element (Preemption EDCA Parameter Set element) to perform contention and data sending. The station not supporting the preemption mechanism uses a parameter in the EDCA parameter set element (EDCA Parameter Set element) to perform contention and data sending. It should be understood that the preemption EDCA parameter set element and the EDCA parameter set element are merely examples of names of the EDCA contention parameters. A specific name of the element is not limited in this application.

For example, in this embodiment of this application, the station supporting preemption may be referred to as a first type station, and the station not supporting preemption may be referred to as a second type station.

In some possible implementations, for a UHR station, the station not supporting the preemption mechanism includes a station not supporting a UHR standard, and is usually referred to as a legacy (legacy) station or a pre-UHR (Pre-UHR) station. The station not supporting the preemption mechanism may further include a station supporting the UHR standard but not supporting the preemption mechanism. It should be understood that, if the preemption mechanism in this application is used only in a next generation standard of the UHR, the UHR station is the station not supporting the preemption mechanism, and the next generation station of the UHR may be classified into two types of stations: a station supporting preemption and a station not supporting preemption.

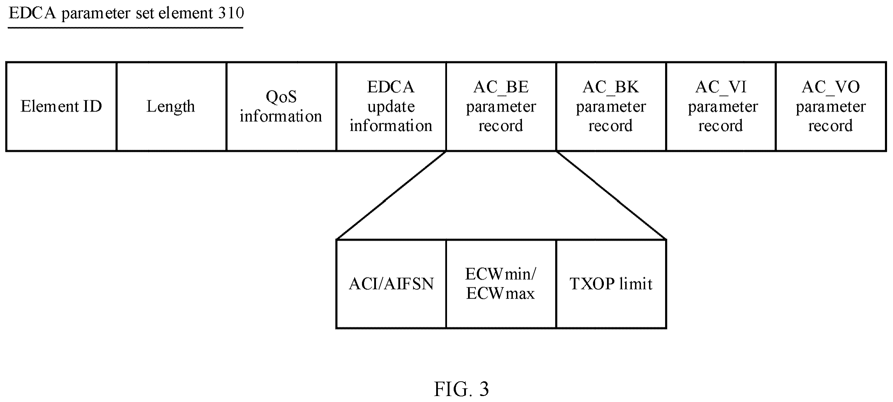

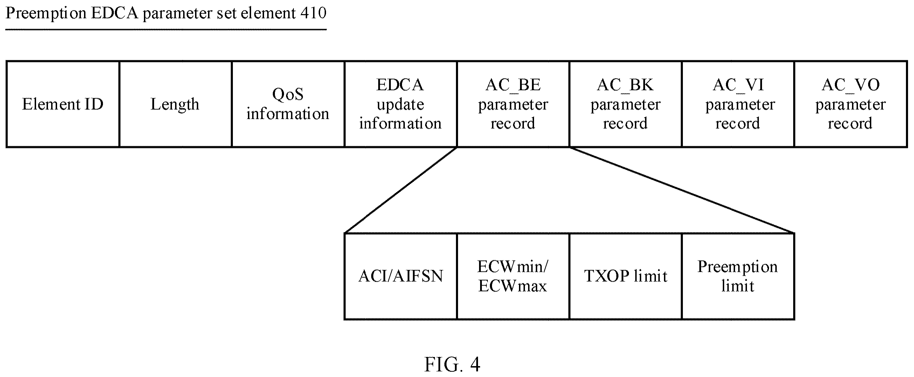

FIG. 3 is a diagram of a structure of an EDCA parameter set element according to an embodiment of this application. FIG. 4 is a diagram of a structure of a preemption EDCA parameter set element according to an embodiment of this application.

A quality of service (quality of service, QoS) AP may indicate, by broadcasting an EDCA parameter set element 310 and a preemption EDCA parameter set element 410, a contention parameter used by a non-AP STA in a BSS. Both the EDCA parameter set element 310 and the preemption EDCA parameter set element 410 include any one or more or all of the following: an element identification code (identity document, ID), a length of a parameter set element, QoS information, EDCA update information, an AC_BE parameter record, an AC_BK parameter record, an AC_VI parameter record, and an AC_VO parameter record, but specific parameter values may be different.

The station identifies the EDCA parameter set element 310 and the preemption EDCA parameter set element 410 based on the element ID. For example, a station not supporting a preemption mechanism receives the contention parameter, identifies, based on the element ID, that the contention parameter is the EDCA parameter set element 310, and then may use a parameter in the EDCA parameter set element 310 to perform contention and data sending. A station supporting the preemption mechanism receives the contention parameter, identifies, based on the element ID, that the contention parameter is the preemption EDCA parameter set element 410, and then uses a parameter in the preemption EDCA parameter set element 410 to perform contention and data sending.

The AC_BE parameter records in the EDCA parameter set element 310 and the preemption EDCA parameter set element 410 include one or more or all of the following: an access category index (access category index, ACI), an arbitration interframe space number (arbitration interframe space number, AIFSN) field, a minimum contention window index (exponent form of cwmin, ECWmin), a maximum contention window index (exponent form of cwmax, ECWmax), and a transmission opportunity (transmission opportunity, TXOP) limit. It should be understood that in this application, only the AC_BE parameter record is used as an example. The AC_BK parameter record, the AC_VI parameter record, and the AC_VO parameter record may also include a same field as the AC_BE parameter record.

Optionally, the preemption EDCA parameter set element 410 may include an ACI/AIFSN field and an ECWmin/ECWmax field. Meanings of the ACI/AIFSN field and the ECWmin/ECWmax field are the same as those in the EDCA parameter set element 310. Alternatively, the ACI/AIFSN field and the ECWmin/ECWmax field may not be included, and a same value in the EDCA parameter set element 310 is reused.

The ACI/AIFSN field indicates a service type. The ECWmin/ECWmax field is used to determine a minimum value and a maximum value of a backoff window, that is, a minimum contention window (minimum contention window, CWmin) and a maximum contention window (maximum contention window, CWmax). CWmin=2ECWmin-1, and CWmax=2-

ECWmax-1. The transmission opportunity (transmission opportunity, TXOP) limit (TXOP Limit) field indicates maximum duration in which a station is allowed to continuously use a channel after the station obtains the channel through contention, and a unit of the TXOP limit field is 32 microseconds.

In this embodiment of this application, the AP sets a large TXOP limit value for the preemption EDCA parameter set element 410, that is, sets the TXOP limit to be greater than a preset threshold, so that the station supporting preemption can continuously use the channel for a long time after performing one successful channel contention, thereby improving system efficiency. The AP sets a small TXOP limit in the EDCA parameter set element 310, that is, sets the TXOP limit to be less than the preset threshold, to control a maximum value of continuous duration in which the station not supporting preemption to use a channel once, to provide more channel access opportunities for the station supporting preemption. It should be understood that, in a typical setting manner, the TXOP limit in the preemption EDCA parameter set element 410 is greater than or equal to the TXOP limit in the EDCA parameter set element 310.

Optionally, the preemption EDCA parameter set element 410 may further include a preemption limit (Preemption Limit) field. The preemption limit field indicates a maximum time length of a PPDU, that is, sets duration in which the station supporting preemption sends the PPDU to be less than a preemption limit, so that a non-low-latency service can be prevented from occupying a long channel use time. It should be understood that, in the typical setting manner, the preemption limit in the preemption EDCA parameter set element 410 is less than or equal to the TXOP limit in the preemption EDCA parameter set element 410.

It should be understood that, for information exchange performed when there is a response frame, the preemption limit needs to include a total time limit for the information exchange. For example, for interaction of data/block acknowledgment (data/BA), a sum of a PPDU carrying data, a PPDU carrying BA, and a short interframe space (short interframe space, SIFS) between the two cannot exceed the preemption limit.

Optionally, only the preemption limit field may be set, and the TXOP limit field is not set in the preemption EDCA parameter set element 410. Alternatively, only the TXOP limit field may be set, and the preemption limit field is not set in the preemption EDCA parameter set element 410. The figure should not be construed as a limitation on this application.

It should be understood that names of the EDCA parameter set element 310 and the preemption EDCA parameter set element 410 and element names in the EDCA parameter set element 310 and the preemption EDCA parameter set element 410 are merely examples, and should not be construed as a limitation on this application.

It should be understood that one access category (access category, AC) may include a plurality of services. If one access category includes both a low-latency service and a non-low-latency service, the preemption limit field is applicable to all services. This operation is simple. Optionally, the preemption limit field is alternatively applicable only to the non-low-latency service. If a service that is being transmitted is the low-latency service, there is no need to give an access opportunity to another low-latency service by using the preemption limit field. This operation helps improve system efficiency.

In this application, setting is performed on the EDCA parameter set element 310 and the preemption EDCA parameter set element 410, so that a good balance is achieved between the service latency and system efficiency.

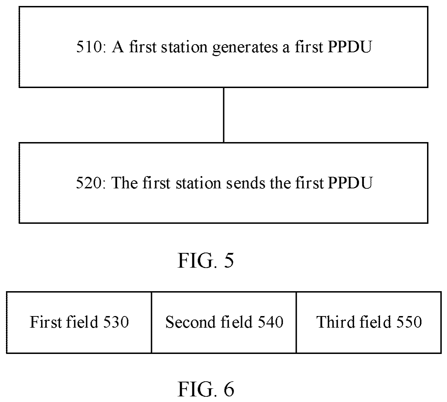

FIG. 5 is an example flowchart of generating and sending, by a first station, a preemption allowed PPDU according to an embodiment of this application.

510: A first station generates a first PPDU.

The first station generates the first PPDU, where the first station includes an access point supporting preemption or a non-access point station supporting preemption.

The first PPDU includes any one or more of a first field, a second field, and a third field, the first field indicates whether a preemption operation is allowed to be performed after sending of the first PPDU is completed, the second field indicates a type of a station that is allowed to perform a preemption operation after sending of the first PPDU is completed, and the third field indicates a number of PPDUs that are sent after sending of the first PPDU is completed and on which a preemption operation is allowed to be performed.

For detailed descriptions of the first field, the second field, and the third field, refer to FIG. 6.

520: The first station sends the first PPDU.

FIG. 6 is a diagram of a field that indicates a preemption operation and that is in a preemption allowed PPDU according to an embodiment of this application.

In this embodiment of this application, a PPDU on which a preemption operation is allowed to be performed after a end of sending a PPDU is referred to as a preemption allowed PPDU (Preemption allowed PPDU), and a PPDU that is sent according to a preemption procedure is referred to as a preemption PPDU (Preemption PPDU). A specific name is not limited in this application, and the name should not be understood as a limitation on this application. In this embodiment of this application, both an AP supporting preemption and a STA supporting preemption can receive or send the preemption allowed PPDU.

In this embodiment of this application, an indication is performed in the PPDU to guide a subsequent preemption operation procedure. For example, any one or more of a first field 530, a second field 540, and a third field 550 may be included in the first PPDU. The first field 530 indicates whether a preemption operation is allowed to be performed after sending of a current PPDU is completed. For example, if a value of the first field 530 is set to 1, it indicates that the preemption operation is allowed to be performed after sending of the PPDU is completed. If the value of the first field 530 is set to 0, it indicates that the preemption operation is not allowed to be performed after sending of the PPDU is completed. A name of the first field 530 is not limited in this application, for example, the first field 530 may also be referred to as a preemption allowed (Preemption Allowed) field.

In a possible implementation, the first field 530 may also be null, that is, the PPDU does not include the first field 530, to indicate that the preemption operation is not allowed to be performed after sending of the current PPDU is completed.

The second field 540 indicates stations that are allowed to perform a preemption operation. For example, a type of the station may include all or a part of the following types: 1. Only a receiving station is allowed to perform a preemption operation. 2. Only an associated station is allowed to perform a preemption operation. 3. Only a non-associated station is allowed to perform a preemption operation. 4. An associated station and a non-associated station are allowed to perform a preemption operation.

The third field 550 indicates a number of preemption PPDUs that are allowed to be sent. For example, when the third field 550 is one bit, a value 0 may indicate that only a single preemption PPDU is allowed to be sent, and a value 1 may indicate that a plurality of preemption PPDUs are allowed to be sent. When the third field 550 is a plurality of bits, it may indicate an upper limit of a number of preemption PPDUs that are allowed to be sent. A name of the third field 550 is not limited in this application, for example, the third field 550 may also be referred to as an allowed preemption number (Preemption PPDU Number) field 530.

It should be understood that, in a specific implementation process of this application, all or a part of fields in FIG. 5 may be used, that is, any one or more of the first field 530, the second field 540, and the third field 550 are used.

It should be understood that the PPDU includes three parts: a physical layer frame header, Data (Data), and physical layer extension (PHY extension, PE). The physical layer frame header includes a physical layer SIG field. The Data includes a medium access control protocol data unit (MAC protocol data unit, MPDU) or an aggregated medium access control protocol data unit (aggregated MAC protocol data unit, A-MPDU), where the A-MPDU includes a plurality of MPDUs. The MPDU includes three parts: a MAC frame header, a frame body (frame body), and a frame detection sequence (frame check sequence, FCS).

Locations in which the first field 530, the second field 540, and the third field 550 are carried may include but are not limited to a physical layer signal (SIG) field (for example, a UHR SIG field or a U SIG field), or any field in a medium access control (medium access control, MAC) frame header carried in the PPDU, for example, an aggregation control (A-Control) field.

It should be understood that the first field 530, the second field 540, and the third field 550 may be carried in a same field, or may be carried in different fields. For example, the current PPDU includes a first field 530, a second field 540, and a third field 550. All the first field 530, the second field 540, and the third field 550 may be carried in a physical layer SIG field in the current PPDU, or all the first field 530, the second field 540, and the third field 550 may be carried in a field in a MAC frame header carried in the current PPDU, or the first field 530 may be carried in a physical layer SIG field in the current PPDU and the second field 540 and the third field 550 are carried in a field in a MAC frame header carried in the current PPDU. In another example, the current PPDU includes a first field 530 and a second field 540. The first field 530 may be carried in a physical layer SIG field in the current PPDU, and the second field 540 may be carried in a field in a MAC frame header carried in the current PPDU, or both the first field 530 and the second field 540 may be carried in a physical layer SIG field in the current PPDU, or both the first field 530 and the second field 540 may be carried in a field in a MAC frame header carried in the current PPDU. In another example, the current PPDU includes a first field 530. The first field 530 may be carried in a physical layer SIG field in the current PPDU or a field in a MAC frame header carried in the current PPDU.

In the technical solutions provided in this application, if a plurality of stations are allowed to initiate preemption, a collision may occur. In this embodiment of this application, a backoff (backoff) mechanism is introduced after the preemption allowed PPDU is sent, to resolve the collision problem between the plurality of stations that initiate preemption.

In this embodiment of this application, a station that sends the preemption allowed PPDU is referred to as a transmission opportunity holder (TXOP holder). This is because the station usually obtains a TXOP first through contention. The transmission opportunity holder in this embodiment of this application may be an AP, or may be a non-AP station. In the following descriptions, an example in which the AP is the transmission opportunity holder is used for description.

It should be understood that there may be one or no response frame at a space of an SIFS time after transmission of the preemption allowed PPDU ends. If there is a response frame, for example, a request to send (request to send, RTS) frame, a clear to send (clear to send, CTS) frame, or an acknowledgment (acknowledge, ACK) frame, the preemption operation starts from an end of the response frame. If there is no response frame, the preemption operation starts from an end of transmission of the preemption allowed PPDU. In this embodiment of this application, a scenario in which there is no response frame is used as an example for description. An implementation of this embodiment is also applicable to a scenario in which there is the response frame, and a difference lies in that a start time of the preemption operation is different.

This embodiment of this application provides two implementations: a backoff operation 1 and a backoff operation 2. In the backoff operation 1, a station that initiates preemption has a higher contention priority. In the backoff operation 2, the transmission opportunity holder has a higher priority.

In the backoff operation 1, the station that initiates preemption needs to perform backoff after a channel is idle for x interframe space (x interframe space, xIFS) after a start moment at which preemption is allowed. The xIFS is a preset constant greater than 0. For example, the xIFS may be an SIFS, a point coordination function interframe space (point coordination function interframe space, PIFS), an arbitration interframe space (arbitration interframe space, AIFS), or the like.

In a backoff mechanism, only a station whose backoff time is reduced to 0 has permission to send the preemption PPDU. If backoff times of a plurality of stations are reduced to 0 at the same time, a station with a higher priority preferentially sends the preemption PPDU.

The transmission opportunity holder also sends a next PPDU after backoff ends. In this case, if cache data of the transmission opportunity holder includes a low-latency service data packet, the low-latency service data packet is preferentially sent; otherwise, a non-low-latency service data packet is continuously sent.

In this embodiment of this application, a preemption window (Preemption CW) of the station that initiates preemption is referred to as a first window, a contention window (contention window, CW) of the transmission opportunity holder is referred to as a second window, the first window is an integer greater than or equal to 0, and the second window is an integer greater than 0.

The transmission opportunity holder may perform backoff in one of the following manners:

Manner 1: Backoff is performed after a channel is idle for an AIFS, where a backoff counter value is randomly selected from the second window, and the value is denoted as M.

Manner 2: Backoff is performed after a channel is idle for xIFS, where a backoff counter value is randomly selected from the second window, or is a specified value, and the value is denoted as M.

For example, the AP is the transmission opportunity holder, and a value M of a backoff counter of the AP is an integer randomly selected from a CW of the AP. For example, if the second window is 15, a positive integer may be randomly determined from (0, 15] as M. For example, obtained M is 7. Optionally, an integer may also be randomly determined from [0, 15] as M. If an obtained integer is 0, re-determining is performed until obtained M is greater than 0. It should be understood that (a, b] represents a range greater than a and less than or equal to b, and [a, b] represents a range greater than or equal to a and less than or equal to b.

In this embodiment of this application, a value of the first window is set to N, and N and M may be two independent parameters. A specific value may be specified in a standard or determined by the transmission opportunity holder.

Alternatively, the parameters N and M may satisfy a relationship of the following formula (1) or formula (2), to avoid a collision between the transmission opportunity holder and the station that initiates preemption.

In a possible implementation, if the transmission opportunity holder performs backoff in Manner 1 (AIFS+backoff), a relationship between the parameters N and M satisfies the following formula (1):

$$N = M + (AIFS\_TXOPHolder - xIFS)/aSlotTime - 1 \qquad \text{Formula (1)}$$

AIFS_TXOPHolder is an AIFSN used by the transmission opportunity holder in channel access, and aSlotTime represents a slot.

In a possible implementation, if the transmission opportunity holder performs backoff in Manner 2 (xIFS+backoff), a relationship between the parameters N and M satisfies the following formula (2):

$$N = M - 1 \qquad \text{Formula (2)}$$

After determining the value N of the first window, the transmission opportunity holder indicates the value to another station that may initiate preemption. The station that initiates preemption, for example, a second station, needs to perform backoff after a channel is idle for xIFS after a start moment at which preemption is allowed, where a value of the backoff counter is an integer randomly selected from [0, N], and may send the preemption PPDU after backoff ends.

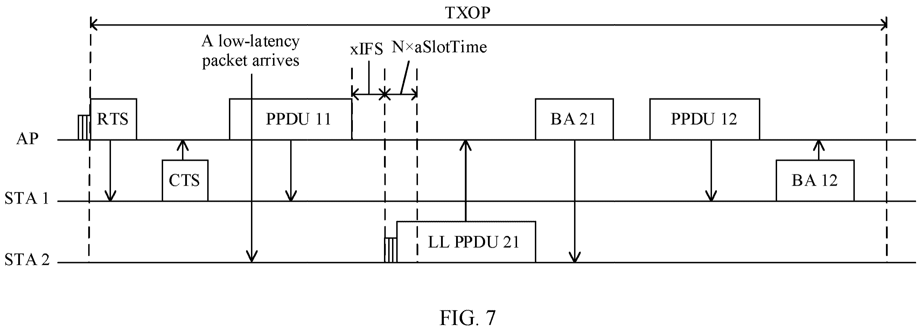

FIG. 7 is a diagram of sending a low-latency service by a station that initiates preemption according to an embodiment of this application.

An AP is a transmission opportunity holder, and a STA 1 and a STA 2 are stations that initiate preemption. An RTS is a request to send frame, a CTS is a clear to send frame, a PPDU 11 is a preemption allowed PPDU, an LL PPDU 21 is a PPDU that requires a low latency (low latency) and that is sent by the STA 2, a BA 21 is a block acknowledgment (block acknowledgment, BA) frame that is sent by the AP and that is for the LL PPDU 21, a PPDU 12 is a non-low latency PPDU, and a BA 12 is a block acknowledgment frame that is sent by the STA 1 and that is for the PPDU 12. After transmission of the PPDU 11 is completed, the STA 2 performs backoff after a channel is idle for xIFS. For example, it is assumed that an initial value of a backoff counter of the STA 2 is 3, the STA 2 sends the LL PPDU 21 when a backoff time is reduced to 0. It should be understood that, because the value of the first window is N, all stations preparing to initiate preemption send low-latency service data within a time of xIFS+N×aSlotTime.

It should be understood that the xIFS time shown in FIG. 7 is merely an example, and may also be an AIFS.

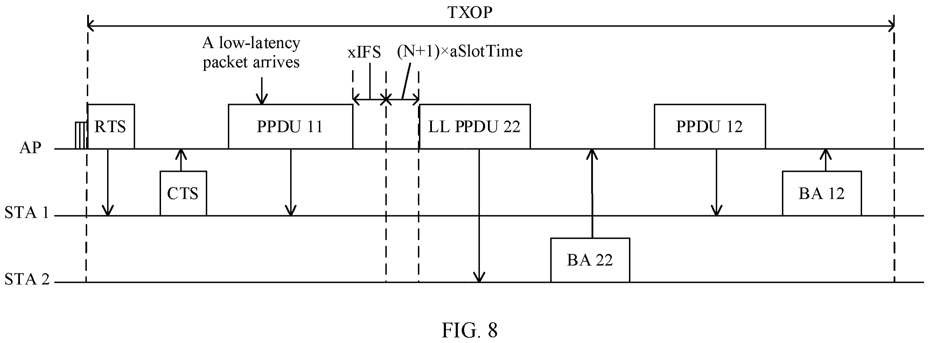

FIG. 8 is a diagram of sending a low-latency service by a transmission opportunity holder according to an embodiment of this application.

An AP is the transmission opportunity holder, and a STA 1 and a STA 2 are stations that initiate preemption. An RTS is a request to send frame, a CTS is a clear to send frame, a PPDU 11 is a preemption allowed PPDU, an LL PPDU 22 is a PPDU that requires a low latency (low latency) and that is sent by the AP, a BA 22 is a block acknowledgment (block acknowledgment, BA) frame that is sent by the STA 2 and that is for the LL PPDU 22, a PPDU 12 is a non-low latency PPDU, and a BA 12 is a block acknowledgment frame that is sent by the STA 1 and that is for the PPDU 12. After transmission of the PPDU 11 is completed, the AP needs to wait for a time of (N+1)×aSlotTime after a channel is idle for xIFS, to send the LL PPDU 22. It should be understood that, because the value of the first window is N, all stations preparing to initiate preemption send low-latency service data within a time of xIFS+N×aSlotTime. Because a value of xIFS+N×aSlotTime is definitely less than a value of xIFS+(N+1)×aSlotTime, in this manner, the transmission opportunity holder makes the station that initiates preemption have a higher contention priority. If a station that initiates preemption caches a low-latency service, the station may preferentially send the low-latency service. If a plurality of stations that initiate preemption caches a low-latency service, the plurality of stations that initiate preemption perform backoff, and a 1st station on which backoff ends sends the low-latency service.

It should be understood that the xIFS time shown in FIG. 8 is merely an example, and may also be an AIFS. A waiting time of (N+1)×aSlotTime is merely an example, and may also be (N+2)×aSlotTime, (N+3)×aSlotTime, or the like, as long as the waiting time of the transmission opportunity holder is greater than xIFS+N×aSlotTime.

In the backoff operation 2, an operation manner of the station that initiates preemption is the same as that in the backoff operation 1. For details, refer to descriptions in FIG. 7. Details are not described again in this application. It should be understood that in the backoff operation 2, the xIFS is greater than the SIFS.

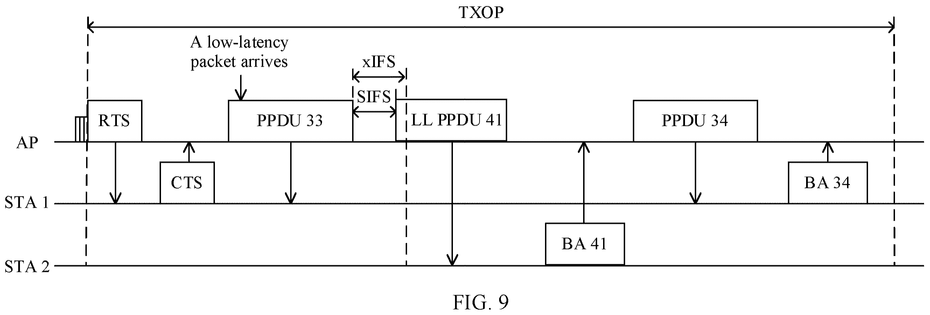

FIG. 9 is a diagram of arrival of a low-latency service of a transmission opportunity holder according to an embodiment of this application.

An AP is the transmission opportunity holder, and a STA 1 and a STA 2 are stations that initiate preemption. An RTS is a request to send frame, a CTS is a clear to send frame, a PPDU 33 is a preemption allowed PPDU, an LL PPDU 41 is a PPDU that requires a low latency (low latency) and that is sent by the AP, a BA 41 is a block acknowledgment (block acknowledgment, BA) frame that is sent by the STA 2 and that is for the LL PPDU 41, a PPDU 34 is a non-low latency PPDU, and a BA 34 is a block acknowledgment frame that is sent by the STA 1 and that is for the PPDU 34.

In the backoff operation 2, if cache data of the transmission opportunity holder includes the low-latency service data LL PPDU 41 in a process of sending the PPDU 33, the transmission opportunity holder is allowed to send the low-latency service data LL PPDU 41 after an SIFS time after transmission of the PPDU 33 ends. Because the station that initiates preemption (for example, the STA 1 and the STA 2) needs to wait at least time of xIFS after the PPDU 33 is sent, and the xIFS is greater than the SIFS, no station that initiates preemption sends a preemption PPDU after the SIFS ends and before the xIFS ends, and no collision occurs.

If cache data of the TXOP holder does not include low-latency service data in a process of sending the PPDU 11, non-low-latency service data is sent only after a channel is idle after waiting for at least xIFS+(N+1)×aSlotTime. Because all stations that are allowed to perform preemption initiate low-latency service data (if any) within the time of xIFS+N×aSlotTime, the non-low-latency service data sent by the TXOP holder does not collide with the preemption PPDU.

It should be understood that the xIFS time shown in FIG. 9 is merely an example, and may also be an AIFS.

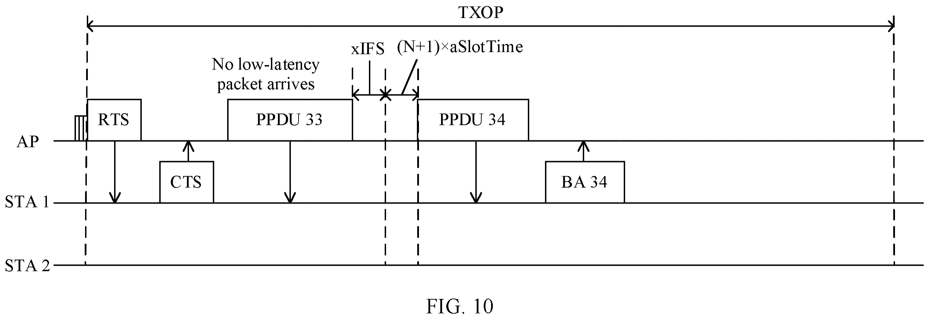

FIG. 10 is a diagram of no arrival of a low-latency service of a transmission opportunity holder according to an embodiment of this application.

An AP is the transmission opportunity holder, and a STA 1 and a STA 2 are stations that initiate preemption. An RTS is a request to send frame, a CTS is a clear to send frame, a PPDU 33 is a preemption allowed PPDU, a PPDU 34 is a non-low latency PPDU, and a BA 34 is a block acknowledgment frame that is sent by the STA 1 and that is for the PPDU 34.

If cache data of the transmission opportunity holder does not include low-latency service data in a process of sending the PPDU 33, non-low-latency service data is sent only after a channel is idle after waiting for at least xIFS+(N+1)×aSlotTime. Because all stations that initiate preemption initiate low-latency service data (if any) within the time of xIFS+N×aSlotTime, non-low-latency service data sent by the transmission opportunity holder does not collide with the preemption PPDU.

It should be understood that the xIFS time shown in FIG. 10 is merely an example, and may also be an AIFS. A waiting time of (N+1)×aSlotTime is merely an example, and may also be (N+2)×aSlotTime, (N+3)×aSlotTime, or the like, as long as the waiting time of the transmission opportunity holder is greater than xIFS+N×aSlotTime.

In some possible application scenarios, the TXOP holder may not be able to accurately learn of a time at which transmission of the preemption PPDU ends. In this embodiment of this application, indication information indicating that preemption ends may be set in the preemption PPDU. For example, the indication information may be referred to as a fourth field in the preemption PPDU, the fourth field may be represented by using one or more bits. For example, one bit may be used to indicate whether the preemption PPDU is a last preemption PPDU, or more bits may be used to indicate a number of to-be-transmitted preemption PPDUs.

In some possible implementations, the fourth field may be carried in the physical layer frame header, for example, UHR SIG or U SIG. A value 0 indicates that there is a subsequent preemption PPDU, and a value 1 indicates that this is the last preemption PPDU. Alternatively, a value 1 may indicate that there is a subsequent preemption PPDU, and a value 0 may indicate that this is the last preemption PPDU.

The fourth field may further reuse a more data (More Data) field in a MAC frame header carried in the preemption PPDU. A value 1 indicates that there is a subsequent preemption PPDU, and a value 0 indicates that this is the last preemption PPDU. Alternatively, a value 0 may indicate that there is a subsequent preemption PPDU, and a value 1 may indicate that this is the last preemption PPDU.

The fourth field may be further carried in an A-Control field or a reserved field in the MAC frame header carried in the preemption PPDU. A value 0 indicates that there is a subsequent preemption PPDU, and a value 1 indicates that this is the last preemption PPDU. Alternatively, a value 1 may indicate that there is a subsequent preemption PPDU, and a value 0 may indicate that this is the last preemption PPDU.

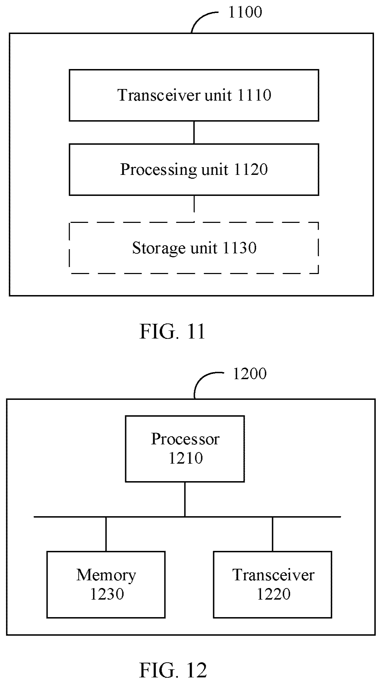

The foregoing describes the method provided in embodiments of this application. Apparatuses provided in embodiments of this application are described below in detail with reference to FIG. 11 and FIG. 12.

FIG. 11 is a block diagram of a communication apparatus according to an embodiment of this application. As shown in FIG. 11, a communication apparatus 1100 may include a processing unit 1120 and a transceiver unit 1110.

It should be understood that the communication apparatus 1100 may correspond to the first station or the second station in embodiments of this application. In an example of description, the communication apparatus 1100 can implement actions, steps, or methods related to the transmission opportunity holder and the station that initiates preemption in FIG. 3 to FIG. 10 in the foregoing method embodiments.

This application provides a communication apparatus, including: a processing unit, configured to generate a first physical layer protocol data unit PPDU, where the first station includes an access point supporting preemption or a non-access point station supporting preemption, the first PPDU includes any one or more of a first field, a second field, and a third field, the first field indicates whether a preemption operation is allowed to be performed after sending of the first PPDU is completed, the second field indicates a type of a station that is allowed to perform a preemption operation after sending of the first PPDU is completed, and the third field indicates a number of PPDUs that are sent after sending of the first PPDU is completed and on which a preemption operation is allowed to be performed; and a transceiver unit, configured to send the first PPDU.

Optionally, in some implementations, the first field, the second field, or the third field is carried in a physical layer signal SIG field in the first PPDU or a field in a medium access control layer MAC frame header carried in the first PPDU.

Optionally, in some implementations, the processing unit is further configured to send a first window, where the first window indicates a longest time for which a station preparing to perform a preemption operation needs to wait, and the first window is an integer greater than or equal to 0.

Optionally, in some implementations, the processing unit is further configured to determine a first backoff counter value based on a second window, where the second window is an integer greater than 0, and the first backoff counter value is an integer greater than 0 and less than or equal to the second window; and the processing unit is further configured to determine the first window based on the first backoff counter value.

Optionally, in some implementations, the first window is carried in the physical layer signal SIG field in the first PPDU or the field in the MAC frame header carried in the first PPDU.

Optionally, in some implementations, the processing unit is further configured to send a second PPDU after an SIFS after sending of the first PPDU ends, where the second PPDU includes low-latency service data.

Optionally, in some implementations, the transceiver unit is further configured to receive a third PPDU, where the third PPDU is a PPDU that is sent by a second station and on which a preemption operation is performed, the second station is a station that performs the preemption operation, the third PPDU includes a fourth field, and the fourth field indicates end information of the preemption operation performed by the second station.

Optionally, in some implementations, the fourth field is carried in any one of the following: a physical layer frame header of the third PPDU, a more data field in a MAC frame header carried in the third PPDU, an aggregation control A-Control field in the MAC frame header carried in the third PPDU, or a reserved field in the MAC frame header carried in the third PPDU.

Optionally, in some implementations, the processing unit is further configured to generate first information, where the first information indicates maximum duration in which a first type station is allowed to continuously use a channel after the first type station obtains the channel through contention, and the first type station includes a station supporting preemption; and the transceiver unit is further configured to send the first information.

Optionally, in some implementations, the processing unit is further configured to generate second information, where the second information indicates a maximum time length for sending a PPDU by the first type station; and the transceiver unit is further configured to send the second information.

Optionally, in some implementations, the processing unit is further configured to generate third information, where the third information indicates maximum duration in which a second type station is allowed to continuously use a channel after the second type station obtains the channel through contention, and the second type station includes a station not supporting preemption; and the transceiver unit is further configured to send the third information.

Refer to the structure of the communication apparatus shown in FIG. 11. This application further provides a communication apparatus, including: a transceiver unit, configured to receive a first window from a first station, where the first station includes an access point supporting preemption or a non-access point station supporting preemption, the second station includes a station preparing to perform a preemption operation, the first window indicates a longest time for which the second station needs to wait to perform a preemption operation, and the first window is an integer greater than or equal to 0; and a processing unit, configured to determine, based on the first window, a waiting time to perform the preemption operation.

Optionally, in some implementations, the first window is carried in a physical layer signal SIG field in a first PPDU or a field in a MAC frame header carried in the first PPDU, and the first PPDU is a PPDU sent by the first station.

Optionally, in some implementations, the processing unit is further configured to determine a second backoff counter value based on the first window, where the second backoff counter value is an integer greater than or equal to 0 and less than or equal to the first window; and the processing unit is further configured to perform the preemption operation when the second backoff counter value decreases to 0.

Optionally, in some implementations, the transceiver unit is further configured to send a third PPDU, where the third PPDU is a PPDU that is sent by the second station and on which a preemption operation is performed, the third PPDU includes a fourth field, and the fourth field indicates end information of the preemption operation performed by the second station.

Optionally, in some implementations, the fourth field is carried in any one of the following: a physical layer frame header of the third PPDU, a more data field in a MAC frame header carried in the third PPDU, an aggregation control A-Control field in the MAC frame header carried in the third PPDU, or a reserved field in the MAC frame header carried in the third PPDU.

Optionally, in some implementations, the transceiver unit is further configured to receive first information from the first station, where the first information indicates maximum duration in which the second station is allowed to continuously use a channel after the second station obtains the channel through contention.

Optionally, in some implementations, the transceiver unit is further configured to receive second information from the first station, where the second information indicates a maximum time length for sending the PPDU by the second station.

It should be understood that, when the communication apparatus 1100 is a chip, the chip includes a transceiver unit and a processing unit. The transceiver unit may be an input/output circuit or a communication interface. The processing unit may be a processor, a microprocessor, or an integrated circuit integrated on the chip.

The transceiver unit 1110 is configured to implement signal receiving and sending operations of the communication apparatus 1100, and the processing unit 1120 is configured to implement a signal processing operation of the communication apparatus 1100.

Optionally, the communication apparatus 1100 may further include a storage unit 1130, and the storage unit 1130 is configured to store instructions.

FIG. 12 is a block diagram of a communication device according to an embodiment of this application. As shown in the figure, the communication device 1200 includes at least one processor 1210, and may further include a transceiver 1220. Optionally, the communication device 1200 further includes the memory 1230, configured to store instructions. The processor 1210 is coupled to the memory 1230, and is configured to execute instructions stored in the memory 1230, to control the transceiver 1220 to send a signal and/or receive a signal.

It should be understood that the processor 1210 and the memory 1230 may be integrated into one processing apparatus. The processor 1210 is configured to execute program code stored in the memory 1230, to implement the foregoing functions. During specific implementation, the memory 1230 may alternatively be integrated into the processor 1210, or may be independent of the processor 1210.

It should be further understood that the transceiver 1220 may include a receiver (which is also referred to as a receiver machine) and a transmitter (which is also referred to as a transmitter machine). The transceiver 1220 may further include an antenna. There may be one or more antennas. The transceiver 1220 may alternatively be a communication interface or an interface circuit.

When the communication device 1200 is a chip, the chip includes a transceiver unit and a processing unit. The transceiver unit may be an input/output circuit or a communication interface. The processing unit may be a processor, a microprocessor, or an integrated circuit integrated on the chip. An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable logic device (programmable logic device, PLD) or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions used to implement the method performed by the first station in the foregoing method embodiment.

For example, when the computer program is executed by a computer, the computer is enabled to implement the method performed by the first station in the foregoing method embodiment.

An embodiment of this application further provides a computer-readable storage medium. The computer-readable storage medium stores computer instructions used to implement the method performed by the second station in the foregoing method embodiment.

For example, when the computer program is executed by a computer, the computer is enabled to implement the method performed by the second station in the foregoing method embodiment.

An embodiment of this application further provides a computer-readable storage medium. The computer-readable storage medium stores computer instructions used to implement the method performed by the first station in the foregoing method embodiment.

For example, when the computer program is executed by a computer, the computer is enabled to implement the method performed by the first station in the foregoing method embodiment.

An embodiment of this application further provides a computer program product including instructions. When the instructions are executed by a computer, the computer is enabled to implement the method performed by the second station in the foregoing method embodiment.

An embodiment of this application further provides a communication system. The communication system includes a first station and a second station. The first station is configured to perform steps of the method performed by the first station in the foregoing method embodiment, and the second station is configured to perform steps of the method performed by the second station in the foregoing method embodiment.

Optionally, the communication system may further include a station not supporting preemption, and the station is configured to perform steps of the method performed by the second type station in the foregoing method embodiment.

It may be clearly understood by a person skilled in the art that, for convenient and brief description, for explanations and beneficial effects of the related content in any one of the communication apparatuses provided above, refer to the corresponding method embodiments provided above. Details are not described herein again.

A specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be executed by the first station or the second station, or a functional module that is in the first station or the second station and that can invoke and execute a program.

Various aspects or features of this application may be implemented as methods, apparatuses, or products using standard programming and/or engineering techniques. As used herein, the term "artificial article" may encompass a computer program accessible from any computer-readable device, carrier, or medium.

The computer-readable storage medium may be any usable medium accessible by the computer, or a data storage device, for example, a server or a data center, integrating one or more usable media. The usable medium (or the computer readable medium) may include but is not limited to, for example, various medium that can store program code such as a magnetic medium or a magnetic storage device (for example, a floppy disk, a hard disk (for example, a removable hard disk), or a magnetic tape), an optical medium (for example, an optical disc, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive), a semiconductor medium (for example, a solid state drive (solid state drive, SSD)), a USB flash drive, a read-only memory (read-only memory, ROM), or a random access memory (random access memory, RAM).

The various storage media described herein may represent one or more devices and/or other machine-readable media for storing information. The term "machine-readable medium" may include, but is not limited to: radio channels and various other media capable of storing, containing, and/or carrying instructions and/or data.

It should be understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The foregoing units described as separate parts may or may not be physically separate, and parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof.

When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. For the computer-readable storage medium, refer to the foregoing descriptions.

It should be understood that, in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   generating, by a first station, a first physical layer protocol data unit PPDU, wherein the first station comprises an access point supporting preemption or a non-access point station supporting preemption, the first PPDU comprises any one or more of a first field, a second field, and a third field, the first field indicates whether a preemption operation is allowed to be performed after sending of the first PPDU is completed, the second field indicates a type of a station that is allowed to perform a preemption operation after sending of the first PPDU is completed, and the third field indicates a number of PPDUs that are sent after sending of the first PPDU is completed and on which a preemption operation is allowed to be performed; and
   sending, by the first station, the first PPDU.

2. The method according to claim 1, wherein the first field, the second field, or the third field is carried in a physical layer signal SIG field in the first PPDU or a field in a medium access control layer MAC frame header carried in the first PPDU.

3. The method according to claim 1 or 2, wherein the method further comprises:
   sending, by the first station, a first window, wherein the first window indicates a longest time for which a station preparing to perform a preemption operation needs to wait, and the first window is an integer greater than or equal to 0.

4. The method according to claim 3, wherein before sending, by the first station, the first window, the method further comprises:

   determining, by the first station, a first backoff counter value based on a second window, wherein the second window is an integer greater than 0, and the first backoff counter value is an integer greater than 0 and less than or equal to the second window; and
   determining, by the first station, the first window based on the first backoff counter value.

5. The method according to claim 3 or 4, wherein the first window is carried in the physical layer signal SIG field in the first PPDU or the field in the MAC frame header carried in the first PPDU.

6. The method according to claim 1 or 2, wherein when the first field comprised in the first PPDU indicates that the preemption operation is allowed to be performed after sending of the first PPDU is completed, the method further comprises:
   sending, by the first station, a second PPDU after a short interframe space SIFS after sending of the first PPDU ends, wherein the second PPDU comprises low-latency service data.

7. The method according to any one of claims 1 to 6, wherein the method further comprises:
   receiving, by the first station, a third PPDU, wherein the third PPDU is a PPDU that is sent by a second station and on which a preemption operation is performed, the second station is a station that performs the preemption operation, the third PPDU comprises a fourth field, and the fourth field indicates end information of the preemption operation performed by the second station.

8. The method according to claim 7, wherein the fourth field is carried in any one of the following: a physical layer frame header of the third PPDU, a more data field in a MAC frame header carried in the third PPDU, an aggregation control A-Control field in the MAC frame header carried in the third PPDU, or a reserved field in the MAC frame header carried in the third PPDU.

9. The method according to any one of claims 1 to 8, wherein the first station is the access point supporting preemption, and the method further comprises:

generating, by the first station, first information, wherein the first information indicates maximum duration in which a first type station is allowed to continuously use a channel after the first type station obtains the channel through contention, and the first type station comprises a station supporting preemption; and
sending, by the first station, the first information.

10. The method according to any one of claims 1 to 9, wherein the method further comprises:

generating, by the first station, second information, wherein the second information indicates a maximum time length for sending a PPDU by the first type station; and
sending, by the first station, the second information.

11. The method according to any one of claims 1 to 10, wherein the method further comprises:

generating, by the first station, third information, wherein the third information indicates maximum duration in which a second type station is allowed to continuously use a channel after the second type station obtains the channel through contention, and the second type station comprises a station not supporting preemption; and
sending, by the first station, the third information.

12. A communication method, wherein the method comprises:

receiving, by a second station, a first window from a first station, wherein the first station comprises an access point supporting preemption or a non-access point station supporting preemption, the second station comprises a station preparing to perform a preemption operation, the first window indicates a longest time for which the second station needs to wait to perform a preemption operation, and the first window is an integer greater than or equal to 0; and
determining, by the second station based on the first window, a waiting time to perform the preemption operation.

13. The method according to claim 12, wherein the first window is carried in a physical layer signal SIG field in a first PPDU or a field in a MAC frame header carried in the first PPDU, and the first PPDU is a PPDU sent by the first station.

14. The method according to claim 12 or 13, wherein determining, by the second station based on the first window, the waiting time to perform the preemption operation comprises:

determining, by the second station, a second backoff counter value based on the first window, wherein the second backoff counter value is an integer greater than or equal to 0 and less than or equal to the first window; and
performing, by the second station, the preemption operation when the second backoff counter value decreases to 0.

15. The method according to any one of claims 12 to 14, wherein the method further comprises:
sending, by the second station, a third PPDU, wherein the third PPDU is a PPDU that is sent by the second station and on which a preemption operation is performed, the third PPDU comprises a fourth field, and the fourth field indicates end information of the preemption operation performed by the second station.

16. The method according to claim 15, wherein the fourth field is carried in any one of the following: a physical layer frame header of the third PPDU, a more data field in a MAC frame header carried in the third PPDU, an aggregation control A-Control field in the MAC frame header carried in the third PPDU, or a reserved field in the MAC frame header carried in the third PPDU.

17. The method according to any one of claims 11 to 16, wherein the first station is the access point supporting preemption, and the method further comprises:
receiving, by the second station, first information from the first station, wherein the first information indicates maximum duration in which the second station is allowed to continuously use a channel after the second station obtains the channel through contention.

18. The method according to any one of claims 11 to 17, wherein the method further comprises:
receiving, by the second station, second information from the first station, wherein the second information indicates a maximum time length for sending the PPDU by the second station.

19. A communication apparatus, comprising:

a processing unit, configured to generate a first physical layer protocol data unit PPDU, wherein the first station comprises an access point supporting preemption or a non-access point station supporting preemption, the first PPDU comprises any one or more of a first field, a second field, and a third field, the first field indicates whether a preemption operation is allowed to be performed after sending of the first PPDU is completed, the second field indicates a type of a station that is allowed to perform a preemption operation after sending of the first PPDU is completed, and the third field indicates a number of PPDUs that are sent after sending of the first PPDU is completed and on which a preemption operation is allowed to be performed; and
a transceiver unit, configured to send the first PPDU.

20. A communication apparatus, comprising:

a transceiver unit, configured to receive a first window from a first station, wherein the first station comprises an access point supporting preemption or a non-access point station supporting preemption, the second station comprises a station preparing to perform a preemption operation, the first window indicates a longest time for which the second station needs to wait to perform a preemption operation, and the first window is an integer greater than or equal to 0; and
a processing unit, configured to determine, based on the first window, a waiting time to perform the preemption operation.

21. A communication apparatus, wherein the apparatus comprises a processor, the processor is coupled to a memory, and the memory stores instructions; and when the instructions are run by the processor, the processor is enabled to perform the method according to any one of claims 1 to 11.

22. A communication apparatus, wherein the apparatus comprises a processor, the processor is coupled to a memory, and the memory stores instructions; and when the instructions are run by the processor, the processor is enabled to perform the method according to any one of claims 12 to 18.

23. A communication system, comprising a first station and/or a second station, wherein the first station is configured to perform the method according to any one of claims 1 to 11, and the second station is configured to perform the method according to any one of claims 12 to 18.

24. A computer-readable storage medium, wherein the computer-readable storage medium stores a computer program or instructions, and the computer program or the instructions are used to implement the method according to any one of claims 1 to 18.

25. A chip, wherein the chip comprises a processor and an interface, and configured to: invoke, from a memory, a computer program stored in the memory, and run the computer program, to perform the method according to any one of claims 1 to 18.

Internet

AP

STA 1

STA 2

STA 3

FIG. 1

| Processor 210 | | Transmitter 220 |
| Memory 230 | | Receiver 240 |
| Signal detector 250 | | Digital signal processor 260 |
| User interface 270 | | |

FIG. 2

EDCA parameter set element 310

| Element ID | Length | QoS information | EDCA update information | AC_BE parameter record | AC_BK parameter record | AC_VI parameter record | AC_VO parameter record |
|---|---|---|---|---|---|---|---|

| ACI/AIFSN | ECWmin/ ECWmax | TXOP limit |
|---|---|---|

FIG. 3

EP 4 661 482 A1

Preemption EDCA parameter set element 410

| Element ID | Length | QoS information | EDCA update information | AC_BE parameter record | AC_BK parameter record | AC_VI parameter record | AC_VO parameter record |
|---|---|---|---|---|---|---|---|

| ACI/AIFSN | ECWmin/ECWmax | TXOP limit | Preemption limit |
|---|---|---|---|

FIG. 4

EP 4 661 482 A1

510: A first station generates a first PPDU

520: The first station sends the first PPDU

FIG. 5

| First field 530 | Second field 540 | Third field 550 |
|---|---|---|

FIG. 6

TXOP

A low-latency
packet arrives

xIFS N×aSlotTime

| RTS | | PPDU 11 | | | | BA 21 | PPDU 12 |

AP

| CTS | | | | | | BA 12 |

STA 1

| LL PPDU 21 |

STA 2

FIG. 7

FIG. 8

FIG. 9

EP 4 661 482 A1

FIG. 10

1100

FIG. 11

1200

FIG. 12

**EP 4 661 482 A1**

## INTERNATIONAL SEARCH REPORT

| International application No. |
| --- |
| **PCT/CN2024/077093** |

| A. | CLASSIFICATION OF SUBJECT MATTER |
| --- | --- |

H04W 28/02(2009.01)i

According to International Patent Classification (IPC) or to both national classification and IPC

| B. | FIELDS SEARCHED |
| --- | --- |

Minimum documentation searched (classification system followed by classification symbols)

IPC:H04L, H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP, IEEE: 占先 字段 窗口 PPDU EDCA pre-emption preemption field window

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111698067 A (HUAWEI TECHNOLOGIES CO., LTD.) 22 September 2020 (2020-09-22) description, paragraphs [0103]-[0126] | 1-25 |
| A | TW 202143788 A (MEDIATEK SINGAPORE PTE. LTD.) 16 November 2021 (2021-11-16) entire document | 1-25 |
| A | WO 2022005215 A1 (WILUS INSTITUTE OF STANDARDS AND TECHNOLOGY INC.) 06 January 2022 (2022-01-06) entire document | 1-25 |
| A | WO 2022165818 A1 (OPPO GUANGDONG MOBILE TELECOMMUNICATIONS CO., LTD.) 11 August 2022 (2022-08-11) entire document | 1-25 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 May 2024** | **14 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

33

**INTERNATIONAL SEARCH REPORT**
Information on patent family members

International application No.

**PCT/CN2024/077093**

| Patent document cited in search report | | | Publication date (day/month/year) | Patent family member(s) | | | Publication date (day/month/year) |
|---|---|---|---|---|---|---|---|
| CN | 111698067 | A | 22 September 2020 | WO | 2020187031 | A1 | 24 September 2020 |
| | | | | EP | 3937408 | A1 | 12 January 2022 |
| | | | | CN | 116232555 | A | 06 June 2023 |
| TW | 202143788 | A | 16 November 2021 | US | 2021352715 | A1 | 11 November 2021 |
| | | | | EP | 3911110 | A1 | 17 November 2021 |
| | | | | CN | 115297568 | A | 04 November 2022 |
| WO | 2022005215 | A1 | 06 January 2022 | KR | 20230019124 | A | 07 February 2023 |
| | | | | CN | 115997476 | A | 21 April 2023 |
| | | | | JP | 2023532095 | W | 26 July 2023 |
| | | | | US | 2023319884 | A1 | 05 October 2023 |
| WO | 2022165818 | A1 | 11 August 2022 | EP | 4262302 | A1 | 18 October 2023 |
| | | | | WO | 2022166157 | A1 | 11 August 2022 |
| | | | | US | 2023354426 | A1 | 02 November 2023 |

Form PCT/ISA/210 (patent family annex) (July 2022)

**REFERENCES CITED IN THE DESCRIPTION**

**Patent documents cited in the description**

- CN 202310172106